# EUROPEAN PATENT SPECIFICATION

(11) **EP 3 065 444 B1**
(45) Date of publication and mention of the grant of the patent: **10.07.2019**
(21) Application number: 14858578.9
(22) Date of filing: 28.10.2014
(51) Int. Cl.: H04W 24/02

(54) **EVOLVED NODE B RECONFIGURATION METHOD, USER EQUIPMENT, AND EVOLVED NODE B**
REKONFIGURATIONSVERFAHREN FÜR EVOLVED-NODE-B, BENUTZERVORRICHTUNG UND EVOLVED-NODE-B
PROCÉDÉ DE RECONFIGURATION DE NOEUD B ÉVOLUÉ, ÉQUIPEMENT UTILISATEUR ET NOEUD B ÉVOLUÉ

(30) Priority: 01.11.2013 CN 201310535521
(43) Date of publication of application: 07.09.2016
(73) Proprietor: China Academy of Telecommunications Technology, Haidian District Beijing 100191 (CN)
(72) Inventor: ZHANG, Dajun, Beijing 100191 (CN); WU, Yumin, Beijing 100191 (CN)
(74) Representative: Studio Torta S.p.A.
(86) International application number: PCT/CN2014/089687
(87) International publication number: WO 2015/062476

(56) References cited:
- CN-A- 102 119 554
- CN-A- 102 149 146
- CN-A- 102 281 633
- NOKIA CORPORATION ET AL: "3GPP TSG RAN WG2 Meeting #83bis; R2-133341; Discussion on detailed C-plane procedures", 3GPP DRAFT; R2-133341_C-PLANE PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718997, Retrieved from the Internet: URL:http://www.3gpp.org/ftp/tsg_ran/WG2_RL 2/TSGR2_83bis/Docs/ [retrieved on 2013-09-27]
- HUAWEI ET AL: "3GPP TSG RAN WG2 Meeting #83bis; R2-133576; Issues in SeNB reconfiguration and SeNB change", 3GPP DRAFT; R2-133576, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), XP050719280, Retrieved from the Internet: URL:http://www.3gpp.org/ftp/tsg_ran/WG2_RL 2/TSGR2_83bis/Docs/ [retrieved on 2013-09-28]
- CATT: "3GPP TSG RAN WG2 Meeting #84; R2-134056; Transmission of SeNB configuration", 3GPP DRAFT; R2-134056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA 2 November 2013 (2013-11-02), XP050753345, Retrieved from the Internet: URL:http://www.3gpp.org/ftp/tsg_ran/WG2_RL 2/TSGR2_84/Docs/ [retrieved on 2013-11-02]
- 3GPP TR 36.842 V0.2.1 (2013-08): "3GPP TR 36.842 V0.2.1 (2013-08); 3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP DRAFT; R2-132986 36842-021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 August 2013 (2013-08-23), XP050718697, Retrieved from the Internet: URL:http://www.3gpp.org/ftp/tsg_ran/WG2_RL 2/TSGR2_83/Docs/ [retrieved on 2013-08-23]

## Description

### TECHNICAL FIELD

The present disclosure relates to the field of network communication technology, in particular to evolved Node B (eNB) reconfiguration methods, a user equipment (UE), and a master eNB (MeNB).

### BACKGROUND

Along with the deployment of local nodes such as Femtocells, microcells and relays, a traditional network architecture mainly consisting of macrocells has been gradually developed into a network architecture including various types of NBs, so as to improve the network coverage. In order to improve the relevant performances for the network architecture including various types of NBs, such a network architecture has been presented in the related art to achieve collaboration/aggregation among a plurality of eNBs via a non-ideal link. In this network architecture, a part of Radio Bearers (RBs) for a UE are located at a Master Cell (MCell) managed by a Master eNB (MeNB), and these RBs include control plane Signaling Radio Bearers (SRB) and user plane Data Radio Bearer (DRB). The other part of the bearers (including both SRBs and DRBs) for the same UE are located at a secondary cell (SCell) managed by a secondary eNB (SeNB).

Further, the bearer separation may be achieved in a bearer distribution mode. The so-called "bearer distribution" refers to that the MeNB is used as an anchor point so as to forward data from or arriving at the SeNB.

In the bearer distribution mode, the SeNB needs to transmit to the MeNB a Radio Resource Control (RRC) reconfiguration parameter generated by the SeNB, and then the MeNB may forward it to the UE, so as to complete the radio parameter configuration for the SeNB. Hence, a RRC reconfiguration message transmitted by the MeNB to the UE includes not only a RRC reconfiguration parameter of the MeNB but also the RRC reconfiguration parameter of the SeNB, i.e., the so-called RRC parameter parallel configuration. Document by NOKIA CORPORATION et al., "Discussion on detailed C-plane procedures", 3GPP TSG RAN WG2 Meeting #83bis; R2-133341, 27 September 2013, discusses, based on the single RRC model, detailed C-plane procedures including SeNB's addition & removal, MeNB and SeNB related reconfiguration as well as how Xn interface should assist in these procedures. However, in the related art, there is no scheme to process the RRC reconfiguration message and a RRC reconfiguration result during the RRC parameter parallel configuration for the SeNB.

### SUMMARY

An object of the present disclosure is to provide an eNB reconfiguration method according to claim 1, an eNB reconfiguration method according to claim 4, a User Equipment according to claim 7, and a master evolved Node B according to claim 8, so as to process the RRC parameter parallel configuration for an SeNB.

The invention is defined by the subject-matter of the independent claims.

Preferred embodiments are set out in the dependent claims.

In one aspect, the present disclosure provides an eNB reconfiguration method, including steps of: receiving, by a UE, from an MeNB an RRC reconfiguration message carrying an RRC reconfiguration parameter of an SeNB and an RRC reconfiguration parameter of the MeNB; when the RRC reconfiguration parameter of the MeNB is ignorable, not returning, by the UE, to the MeNB a message, or returning RRC reconfiguration result information of the SeNB to the MeNB; when RRC reconfiguration for the MeNB has been completed in accordance with the reconfiguration parameter of the MeNB, returning, by the UE, to the MeNB an RRC reconfiguration success message carrying the RRC reconfiguration result information of the SeNB; and when an abnormality occurs during the RRC reconfiguration for the MeNB in accordance with the RRC reconfiguration parameter of the MeNB, initiating, by the UE, RRC reconstruction for the MeNB.

According to the method of the present disclosure, in the case of bearer distribution, when the RRC reconfiguration message received by the UE includes both the RRC reconfiguration parameter of the MeNB and the RRC reconfiguration parameter of the SeNB, an RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

Optionally, when the RRC reconfiguration for the SeNB has been completed in accordance with the RRC reconfiguration parameter of the SeNB, the RRC reconfiguration result information of the SeNB is RRC reconfiguration success information of the SeNB, and when an abnormality occurs during the RRC reconfiguration in accordance with the RRC reconfiguration parameter of the SeNB, the RRC reconfiguration result information of the SeNB is RRC reconfiguration abnormality information of the SeNB.

Optionally, the method further includes, when the RRC reconfiguration parameter of the SeNB is ignorable, not returning to the MeNB information carrying the RRC reconfiguration result of the SeNB.

In another aspect, the present disclosure provides an eNB reconfiguration method, including steps of: receiving, by an MeNB, from an SeNB an RRC reconfiguration message carrying an RRC reconfiguration parameter of the SeNB; transmitting, by the MeNB, to a UE an RRC reconfiguration message of the MeNB carrying the RRC reconfiguration message from the SeNB, the RRC reconfiguration message of the MeNB further including an RRC reconfiguration parameter of the MeNB; and when the MeNB has received from the UE RRC reconfiguration result information of the SeNB, returning, by the MeNB, to the SeNB an RRC reconfiguration result in accordance with the RRC reconfiguration result information of the SeNB.

According to the method of the present disclosure, in the case of bearer distribution, the MeNB transmits, in a transparent mode, to the UE the RRC reconfiguration message of the SeNB, and return the RRC reconfiguration result received from the UE to the SeNB. As a result, it is able for a network side to acquire the RRC reconfiguration result of the SeNB, thereby to process the RRC parameter parallel configuration for the SeNB.

Optionally, the step of returning to the SeNB the RRC reconfiguration result in accordance with the RRC reconfiguration result information of the SeNB includes: when the RRC reconfiguration result information of the SeNB is RRC reconfiguration success information of the SeNB, returning, by the MeNB, to the SeNB an RRC reconfiguration success message; and when the RRC reconfiguration result information of the SeNB is RRC reconfiguration abnormality information, returning, by the MeNB, to the SeNB an RRC reconfiguration abnormality message.

Optionally, the method further includes, when the RRC reconfiguration result information of the SeNB has not been received, not returning to the SeNB the RRC reconfiguration result.

In yet another aspect, the present disclosure provides an eNB reconfiguration method, including steps of: when an MeNB has received an RRC reconfiguration message of an SeNB, parsing the RRC reconfiguration message of the SeNB; when parameter configuration acquired by parsing the RRC reconfiguration message of the SeNB is acceptable, forwarding, by the MeNB, to a UE the RRC reconfiguration message of the SeNB, and returning an RRC reconfiguration success message to the SeNB after RRC reconfiguration for the SeNB has been completed successfully; and when the parameter configuration acquired by parsing the RRC reconfiguration message of the SeNB is unacceptable, transmitting, by the MeNB, to the SeNB an RRC reconfiguration abnormality message.

According to the method of the present disclosure, in the case of bearer distribution, the MeNB parses at first the RRC reconfiguration message of the SeNB, and transmit to the SeNB the RRC reconfiguration success message or an RRC parameter reconstruction message in accordance with the parameter configuration. As a result, it is able for the MeNB to effectively process the RRC parameter parallel configuration for the SeNB.

Optionally, the method further includes, when the RRC reconfiguration message of the SeNB is ignorable, not performing any processing by the MeNB, or transmitting to the SeNB a notification message notifying that the RRC reconfiguration message of the SeNB is ignorable.

In still yet another aspect, the present disclosure provides an eNB reconfiguration method, including steps of: receiving, by an MeNB, an RRC reconfiguration message of an SeNB carrying a first RRC transaction identifier and an RRC reconfiguration parameter of the SeNB; generating, by the MeNB, an RRC reconfiguration message carrying a second RRC transaction identifier and the RRC reconfiguration parameter of the SeNB, and transmitting it to a UE; storing, by the MeNB, a correspondence between the first RRC transaction identifier and the second RRC transaction identifier; receiving, by the MeNB, from the UE a RRC reconfiguration response message carrying the second RRC transaction identifier and RRC reconfiguration result information; and transmitting, by the MeNB, to the SeNB an RRC reconfiguration response message carrying the first RRC transaction identifier and the RRC reconfiguration result information.

According to the method of the present disclosure, in the case of bearer distribution, after the MeNB has received the RRC reconfiguration message of the SeNB carrying the RRC reconfiguration parameter, it constructs the RRC reconfiguration message of the MeNB, and stores the correspondence between the RRC transaction identifiers carried in the two messages. In this way, merely the received RRC reconfiguration message is processed at a UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

In still yet another aspect, the present disclosure provides in a UE, including: an RRC reconfiguration information reception module configured to receive from an MeNB an RRC reconfiguration message carrying an RRC reconfiguration parameter of an SeNB and an RRC reconfiguration parameter of the MeNB; and an RRC reconfiguration result processing module configured to, when the RRC reconfiguration parameter of the MeNB is ignorable, not return to the MeNB a message or return RRC reconfiguration result information of the SeNB to the MeNB, when RRC reconfiguration for the MeNB has been completed in accordance with the RRC reconfiguration parameter of the MeNB, return to the MeNB an RRC reconfiguration success message carrying the RRC reconfiguration result information of the SeNB, and when an abnormality occurs during the RRC reconfiguration for the MeNB in accordance with the RRC reconfiguration parameter of the MeNB, initiate RRC reconstruction for the MeNB.

According to the UE of the present disclosure, in the case of bearer distribution, when the RRC reconfiguration message received by the UE includes both the RRC reconfiguration parameter of the MeNB and the RRC reconfiguration parameter of the SeNB, a RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

Optionally, when the RRC reconfiguration for the SeNB has been completed in accordance with the RRC reconfiguration parameter of the SeNB, the RRC reconfiguration result information of the SeNB is RRC reconfiguration success information of the SeNB, and when an abnormality occurs during the RRC reconfiguration in accordance with the RRC reconfiguration parameter of the SeNB, the RRC reconfiguration result information of the SeNB is RRC reconfiguration abnormality information of the SeNB.

Optionally, when the RRC reconfiguration parameter of the SeNB is ignorable, the RRC reconfiguration result processing module is further configured to not return to the MeNB information carrying the RRC reconfiguration result of the SeNB.

In still yet another aspect, the present disclosure provides a UE, including a processor configured to: receive from an MeNB an RRC reconfiguration message carrying an RRC reconfiguration parameter of an SeNB and an RRC reconfiguration parameter of the MeNB; when the RRC reconfiguration parameter of the MeNB is ignorable, not return to the MeNB a message, or return RRC reconfiguration result information of the SeNB to the MeNB; when RRC reconfiguration for the MeNB has been completed in accordance with the RRC reconfiguration parameter of the MeNB, return to the MeNB an RRC reconfiguration success message carrying the RRC reconfiguration result information of the SeNB; and when an abnormality occurs during the RRC reconfiguration for the MeNB in accordance with the RRC reconfiguration parameter of the MeNB, initiate RRC reconstruction for the MeNB.

According to the UE of the present disclosure, in the case of bearer distribution, when the RRC reconfiguration message received by the UE includes both the RRC reconfiguration parameter of the MeNB and the RRC reconfiguration parameter of the SeNB, an RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

In still yet another aspect, the present disclosure provides an eNB, including: an RRC reconfiguration message reception module configured to receive from an SeNB an RRC reconfiguration message carrying an RRC reconfiguration parameter of the SeNB; an RRC reconfiguration message transmission module configured to transmit to a UE an RRC reconfiguration message of the MeNB carrying the RRC reconfiguration message from the SeNB, the RRC reconfiguration message of the MeNB further including an RRC reconfiguration parameter of the MeNB; and an RRC reconfiguration result returning module configured to, when the MeNB has received from the UE RRC reconfiguration result information of the SeNB, return to the SeNB an RRC reconfiguration result in accordance with the RRC reconfiguration result information of the SeNB.

According to the MeNB of the present disclosure, in the case of bearer distribution, the MeNB transmits, in a transparent mode, to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

Optionally, the RRC reconfiguration result returning module is configured to: when the RRC reconfiguration result information of the SeNB is RRC reconfiguration success information of the SeNB, return to the SeNB an RRC reconfiguration success message; and when the RRC reconfiguration result information of the SeNB is RRC reconfiguration abnormality information, return to the SeNB an RRC reconfiguration abnormality message.

Optionally, the RRC reconfiguration result returning module is further configured to, when the RRC reconfiguration result information of the SeNB has not been received, not return to the SeNB the RRC reconfiguration result.

In still yet another aspect, the present disclosure provides an eNB, including a processor configured to: receive from an SeNB an RRC reconfiguration message carrying an RRC reconfiguration parameter of the SeNB; transmit to a UE an RRC reconfiguration message of the MeNB carrying the RRC reconfiguration message from the SeNB, the RRC reconfiguration message of the MeNB further including an RRC reconfiguration parameter of the MeNB; and when the MeNB has received from the UE RRC reconfiguration result information of the SeNB, return to the SeNB an RRC reconfiguration result in accordance with the RRC reconfiguration result information of the SeNB.

According to the MeNB of the present disclosure, in the case of bearer distribution, the MeNB transmits, in a transparent mode, to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

In still yet another aspect, the present disclosure provides an eNB, including: an RRC reconfiguration message parsing module configured to, when the MeNB has received an RRC reconfiguration message of an SeNB, parse the RRC reconfiguration message of the SeNB; and an RRC reconfiguration result returning module configured to, when parameter configuration acquired by parsing the RRC reconfiguration message of the SeNB is acceptable, forward to a UE the RRC reconfiguration message of the SeNB and return an RRC reconfiguration success message to the SeNB after RRC reconfiguration for the SeNB has been completed successfully, and when the parameter configuration acquired by parsing the RRC reconfiguration message of the SeNB is unacceptable, transmit to the SeNB an RRC reconfiguration abnormality message.

According to the MeNB of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

Optionally, the RRC reconfiguration result returning module is further configured to, when the RRC reconfiguration message of the SeNB is ignorable, not perform any processing or transmit to the SeNB a notification message notifying that the RRC reconfiguration message of the SeNB is ignorable.

In still yet another aspect, the present disclosure provides an eNB, including a processor configured to: when the MeNB has received an RRC reconfiguration message of an SeNB, parse the RRC reconfiguration message of the SeNB; when parameter configuration acquired by parsing the RRC reconfiguration message of the SeNB is acceptable, forward to a UE the RRC reconfiguration message of the SeNB and return an RRC reconfiguration success message to the SeNB after RRC reconfiguration for the SeNB has been completed successfully; and when the parameter configuration acquired by parsing the RRC reconfiguration message of the SeNB is unacceptable, transmit to the SeNB an RRC reconfiguration abnormality message.

According to the MeNB of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

In still yet another aspect, the present disclosure provides an eNB, including: an RRC reconfiguration message reception module configured to receive an RRC reconfiguration message of an SeNB carrying a first RRC transaction identifier and an RRC reconfiguration parameter of the SeNB; an RRC reconfiguration message transmission module configured to generate an RRC reconfiguration message carrying a second RRC transaction identifier and the RRC reconfiguration parameter of the SeNB, and transmit it to a UE; a correspondence storing module configured to store a correspondence between the first RRC transaction identifier and the second RRC transaction identifier; an RRC reconfiguration response reception module configured to receive from the UE an RRC reconfiguration response message carrying the second RRC transaction identifier and RRC reconfiguration result information; and an RRC reconfiguration response transmission module configured to transmit to the SeNB an RRC reconfiguration response message carrying the first RRC transaction identifier and the RRC reconfiguration result information.

According to the MeNB of the present disclosure, in the case of bearer distribution, after the MeNB has received the RRC reconfiguration message of the SeNB carrying the RRC reconfiguration parameter, it constructs the RRC reconfiguration message of the MeNB, and stores the correspondence between the RRC transaction identifiers carried in the two messages. In this way, merely the received RRC reconfiguration message is processed at a UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

In still yet another aspect, the present disclosure provides an MeNB, including a processor configured to: receive an RRC reconfiguration message of an SeNB carrying a first RRC transaction identifier and an RRC reconfiguration parameter of the SeNB; generate an RRC reconfiguration message carrying a second RRC transaction identifier and the RRC reconfiguration parameter of the SeNB, and transmit it to a UE; store a correspondence between the first RRC transaction identifier and the second RRC transaction identifier; receive from the UE an RRC reconfiguration response message carrying the second RRC transaction identifier and RRC reconfiguration result information; and transmit to the SeNB an RRC reconfiguration response message carrying the first RRC transaction identifier and the RRC reconfiguration result information.

According to the MeNB of the present disclosure, in the case of bearer distribution, after the MeNB has received the RRC reconfiguration message of the SeNB carrying the RRC reconfiguration parameter, it constructs the RRC reconfiguration message of the MeNB, and stores the correspondence between the RRC transaction identifiers carried in the two messages. In this way, merely the received RRC reconfiguration message is processed at a UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

### BRIEF DESCRIPTION OF THE DRAWINGS

Fig.1 is a flow chart of an eNB reconfiguration method according to one embodiment of the present disclosure;
Fig.2 is another flow chart of the eNB reconfiguration method according to one embodiment of the present disclosure;
Fig.3 is yet another flow chart of the eNB reconfiguration method according to one embodiment of the present disclosure;
Fig.4 is still yet another flow chart of the eNB reconfiguration method according to one embodiment of the present disclosure;
Fig.5 is a schematic view showing a network scenario where bearers are separated from each other according to one embodiment of the present disclosure;
Fig.6 is a schematic view showing a UE according to one embodiment of the present disclosure;
Fig.7 is a schematic view showing an eNB according to one embodiment of the present disclosure;
Fig.8 is another schematic view showing the eNB according to one embodiment of the present disclosure;
Fig.9 is yet another schematic view showing the eNB according to one embodiment of the present disclosure;
Fig.10 is another schematic view showing the UE according to one embodiment of the present disclosure;
Fig.11 is still yet another schematic view showing the eNB according to one embodiment of the present disclosure;
Fig.12 is still yet another schematic view showing the eNB according to one embodiment of the present disclosure; and
Fig.13 is still yet another schematic view showing the eNB according to one embodiment of the present disclosure.

### DETAILED DESCRIPTION OF THE EMBODIMENTS

Embodiments of the present disclosure provide an eNB reconfiguration method, UE and an eNB. The embodiments of the present disclosure will be described hereinafter in conjunction with the drawings.

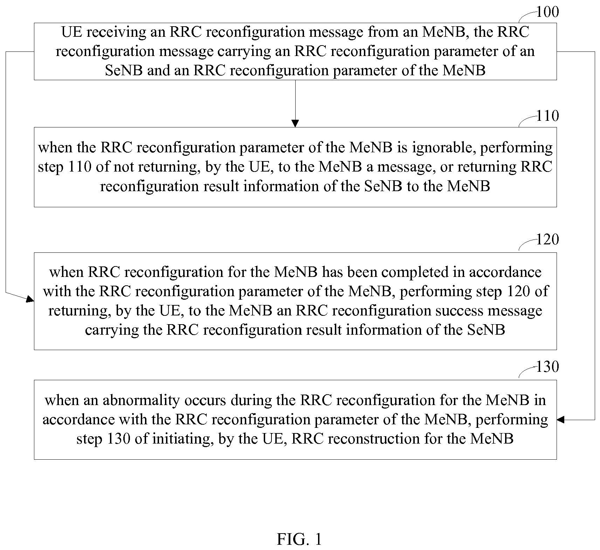

As shown in Fig.1, an eNB reconfiguration method in some embodiments of the present disclosure includes: Step 100 of receiving, by a UE, from an MeNB an RRC reconfiguration message carrying an RRC reconfiguration parameter of an SeNB and an RRC reconfiguration parameter of the MeNB; Step 110 of, when the RRC reconfiguration parameter of the MeNB is ignorable, not returning, by the UE, to the MeNB a message, or returning RRC reconfiguration result information of the SeNB to the MeNB; Step 120 of, when RRC reconfiguration for the MeNB has been completed in accordance with the RRC reconfiguration parameter of the MeNB, returning, by the UE, to the MeNB an RRC reconfiguration success message carrying the RRC reconfiguration result information of the SeNB; and Step 130 of, when an abnormality occurs during the RRC reconfiguration for the MeNB in accordance with the RRC reconfiguration parameter of the MeNB, initiating, by the UE, RRC reconstruction for the MeNB.

According to the method in the embodiments of the present disclosure, in the case of bearer distribution, when the RRC reconfiguration message received by the UE includes both the RRC reconfiguration parameter of the MeNB and the RRC reconfiguration parameter of the SeNB, the RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

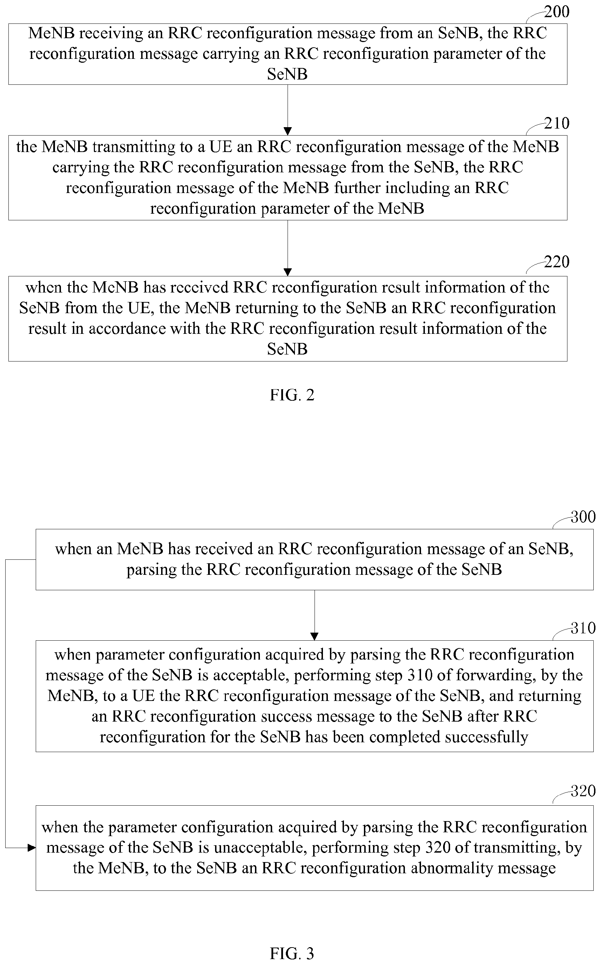

As shown in Fig.2, an eNB reconfiguration method in some embodiments of the present disclosure includes: Step 200 of receiving, by an MeNB, from an SeNB an RRC reconfiguration message carrying am RRC reconfiguration parameter of the SeNB; Step 210 of transmitting, by the MeNB, to a UE an RRC reconfiguration message of the MeNB carrying the RRC reconfiguration message from the SeNB, the RRC reconfiguration message of the MeNB further including an RRC reconfiguration parameter of the MeNB; and Step 220 of, when the MeNB has received from the UE RRC reconfiguration result information of the SeNB, returning, by the MeNB, to the SeNB an RRC reconfiguration result in accordance with the RRC reconfiguration result information of the SeNB.

According to the method in the embodiments of the present disclosure, in the case of bearer distribution, the MeNB transmits, in a transparent mode, to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

As shown in Fig.3, an eNB reconfiguration method in some embodiments of the present disclosure includes: Step 300 of, when an MeNB has received an RRC reconfiguration message of an SeNB, parsing the RRC reconfiguration message of the SeNB; Step 310 of, when parameter configuration acquired by parsing the RRC reconfiguration message of the SeNB is acceptable, forwarding, by the MeNB, to a UE the RRC reconfiguration message of the SeNB, and returning an RRC reconfiguration success message to the SeNB after RRC reconfiguration for the SeNB has been completed successfully; and Step 320 of, when the parameter configuration acquired by parsing the RRC reconfiguration message of the SeNB is unacceptable, transmitting, by the MeNB, to the SeNB an RRC reconfiguration abnormality message.

According to the method in the embodiments of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

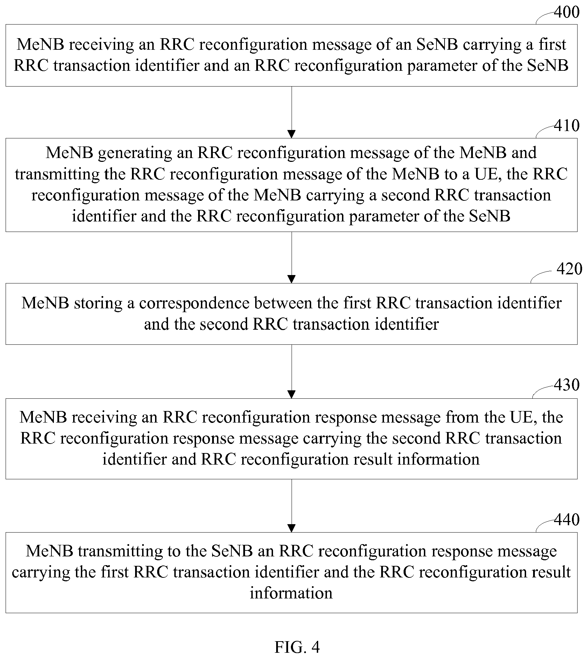

As shown in Fig.4, an eNB reconfiguration method in some embodiments of the present disclosure includes: Step 400 of receiving, by an MeNB, an RRC reconfiguration message of an SeNB carrying a first RRC transaction identifier and an RRC reconfiguration parameter of the SeNB; Step 410 of generating, by the MeNB, an RRC reconfiguration message carrying a second RRC transaction identifier and the RRC reconfiguration parameter of the SeNB, and transmitting the RRC reconfiguration parameter of the SeNB to a UE; Step 420 of storing, by the MeNB, a correspondence between the first RRC transaction identifier and the second RRC transaction identifier; Step 430 of receiving, by the MeNB, from the UE an RRC reconfiguration response message carrying the second RRC transaction identifier and RRC reconfiguration result information; and Step 440 of transmitting, by the MeNB, to the SeNB an RRC reconfiguration response message carrying the first RRC transaction identifier and the RRC reconfiguration result information.

According to the method in the embodiments of the present disclosure, in the case of bearer distribution, after the MeNB has received the RRC reconfiguration message of the SeNB carrying the RRC reconfiguration parameter, the MeNB constructs the RRC reconfiguration message of the MeNB, and stores the correspondence between the RRC transaction identifiers carried in the two messages. In this way, merely the received RRC reconfiguration message is processed at a UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

The present disclosure will be described hereinafter in more details in conjunction with a specific application scenario including the UE and the eNBs.

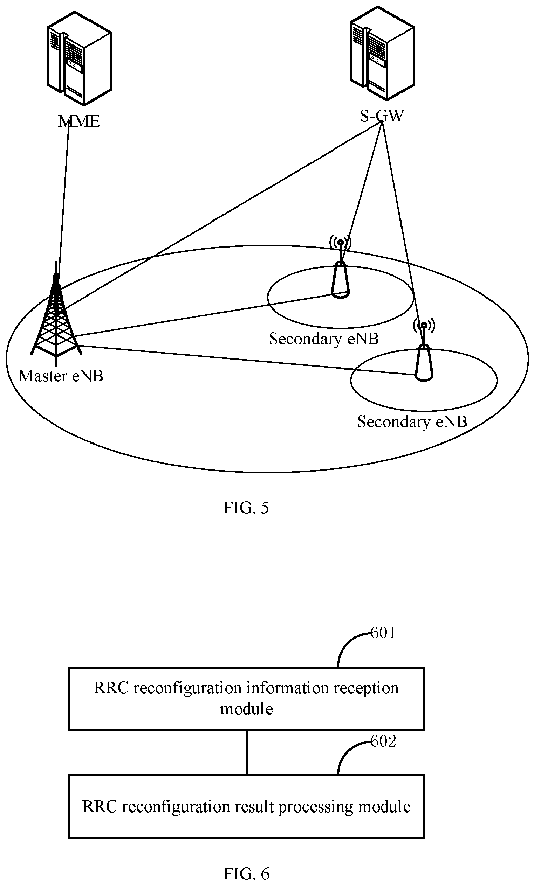

As shown in Fig.5, in a network scenario where bearer separation occurs, a bearer between a signaling gateway (S-GW) of the UE and the MeNB is distributed by two SeNBs, so there are three bearer paths between the UE and the MeNB.

When the RRC reconfiguration message of the SeNB is transmitted by the MeNB, in a transparent mode, to the UE, there are the following five application examples.

In the first application example, when the RRC reconfiguration message of the SeNB itself is ignorable, the method may include the following steps.

At first, the SeNB constructs a new RRC reconfiguration message carrying a new RRC reconfiguration parameter. The RRC reconfiguration message is included in an Xn interface message, and transmitted to the MeNB via a RRC container.

The MeNB does not parse the RRC reconfiguration message, but transmits a newly-generated Uu interface RRC reconfiguration message (i.e., the RRC reconfiguration message of the MeNB) carrying the RRC reconfiguration message to the UE. The Uu interface RRC reconfiguration message further carries the RRC reconfiguration parameter of the MeNB.

Then the UE checks the RRC reconfiguration parameter of the MeNB and the RRC reconfiguration parameter of the SeNB. When the RRC configuration for the MeNB has been completed successfully and the RRC reconfiguration message of the SeNB is ignorable (e.g., the parameter in the RRC reconfiguration message is parsed wrongly), no RRC reconfiguration result information of the SeNB (e.g., RRC container information of the SeNB) is carried in the RRC reconfiguration success message created by the UE.

Finally, after the MeNB has received the RRC reconfiguration success message constructed by the UE, it may be interpreted as that the configuration for the MeNB has been completed successfully by the UE. However, at this time, the RRC reconfiguration message of the SeNB is ignorable, so no further processing is performed.

In the second application example, when the configuration for the MeNB and the SeNB has been completed successfully by the UE, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

The MeNB does not parse the RRC reconfiguration message, but transmits a newly-generated Uu interface RRC reconfiguration message carrying the RRC reconfiguration message to the UE. The Uu interface RRC reconfiguration message further carries the RRC reconfiguration parameter of the MeNB.

Then, the UE checks the RRC reconfiguration parameter of the MeNB and the RRC reconfiguration parameter of the SeNB. When the RRC reconfiguration for the MeNB and the RRC reconfiguration for the SeNB have been completed successfully, the UE constructs an RRC reconfiguration success message carrying an RRC reconfiguration success message of the SeNB (e.g., a container carrying the RRC reconfiguration success message of the SeNB) and transmits it to the MeNB.

After the MeNB has received the RRC reconfiguration success message constructed by the UE, it may be interpreted as that the configuration for the MeNB and the SeNB has been completed successfully by the UE, and then the MeNB transmits the RRC reconfiguration success message of the SeNB carried in the container to the SeNB.

Finally, the SeNB receives an Xn interface RRC reconfiguration success message.

In the third application example, when the RRC reconfiguration for the SeNB needs to be reconstructed, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

The MeNB does not parse the RRC reconfiguration message, but transmits a newly-generated Uu interface RRC reconfiguration message carrying the RRC reconfiguration message to the UE. The Uu interface RRC reconfiguration message further carries the RRC reconfiguration parameter of the MeNB.

Then, the UE checks the RRC reconfiguration parameter of the MeNB and the RRC reconfiguration parameter of the SeNB. When the RRC configuration for the MeNB has been completed successfully but an abnormality occurs for the RRC reconfiguration for the SeNB, the UE constructs an RRC reconfiguration success message carrying the RRC reconfiguration abnormality information of the SeNB (e.g., the RRC reconfiguration abnormality information is carried in a new RRC Information Element (IE)), and transmits it to the MeNB.

After the MeNB has received the RRC reconfiguration success message constructed by the UE, it may be interpreted as that the configuration for the MeNB has been completed successfully, but the abnormality occurs for the RRC reconfiguration for the SeNB.

Then, the MeNB notifies, via the Xn interface, the SeNB of the RRC reconfiguration abnormality through an Xn IE or RRC IE. To be specific, the MeNB may notify the SeNB of the RRC reconfiguration abnormality by notifying it that all the bearers need to be reconfigured.

Finally, after the SeNB has received the notification from the MeNB, the original radio parameter configuration may be adopted, and the subsequent reconfiguration for all the bearers may be performed.

In the fourth application example, when an RRC message of the MeNB itself is decoded wrongly, the method may include the following steps.

At first, the SeNB creates a new RRC reconfiguration message carrying a new RRC reconfiguration parameter. The RRC reconfiguration message is included in an Xn interface message, and transmitted via an RRC container to the MeNB.

The MeNB does not parse the RRC reconfiguration message, but transmits a newly-generated Uu interface RRC reconfiguration message carrying the RRC reconfiguration message to the UE. The Uu interface RRC reconfiguration message further carries an RRC reconfiguration parameter of the MeNB.

Then, the UE checks the RRC reconfiguration parameter of the MeNB and the RRC reconfiguration parameter of the SeNB. When an RRC message of the MeNB itself is ignorable (e.g., it is decoded wrongly), the UE may return no information to the MeNB. When the MeNB fails to receive any response message, it may be interpreted as that the RRC reconfiguration messages of the MeNB and the SeNB are ignorable.

In the fifth application example, when the RRC reconfiguration for the SeNB needs to be recreated, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

The MeNB does not parse the RRC reconfiguration message, but transmits a newly-generated Uu interface RRC reconfiguration message carrying the RRC reconfiguration message to the UE. The Uu interface RRC reconfiguration message further carries an RRC reconfiguration parameter of the MeNB.

Then, the UE checks the RRC reconfiguration parameter of the MeNB and the RRC reconfiguration parameter of the SeNB. When the RRC reconfiguration for the MeNB needs to be reconstructed, the UE may initiate the RRC reconstruction for the MeNB.

When the MeNB parses the RRC reconfiguration message of the SeNB, there are the following four application examples.

In the sixth application example, when the MeNB constructs a new RRC-transaction identifier as well as a mapping relationship, the method may include the following steps.

The SeNB constructs a new RRC reconfiguration message carrying a first RRC-transaction identifier. The RRC reconfiguration message is included in an Xn interface message, and transmitted to the MeNB via an RRC container.

Then, the MeNB parses the RRC reconfiguration message and extracts the first RRC-transaction identifier.

Then, the MeNB maps a value of the first RRC-transaction identifier to a second RRC-transaction identifier carried in a newly-generated Uu interface RRC reconfiguration message, and stores the mapping relationship.

Next, the MeNB transmits the Uu interface RRC reconfiguration message carrying the RRC reconfiguration parameter of the SeNB in the Xn interface message and the RRC reconfiguration parameter of the MeNB to the UE.

After the MeNB has received a Uu interface RRC reconfiguration response message, it extracts the corresponding second RRC-transaction identifier, searches for the first RRC-transaction identifier corresponding to the Xn interface, and adds it into a corresponding Xn interface RRC reconfiguration response message.

Finally, the MeNB constructs an RRC reconfiguration response message of the SeNB, and transmits it to the SeNB via an RRC container.

In the seventh application example, when the RRC reconfiguration message of the SeNB itself is encoded wrongly, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

Then, the MeNB parses the RRC reconfiguration message. When the RRC reconfiguration message itself is ignorable (e.g., the RRC reconfiguration message is encoded or decoded wrongly), no further processing is performed, or a failure response message carrying a corresponding error type may be returned to the SeNB.

When the MeNB does not perform any further processing and the SeNB fails to receive any response message from the MeNB, it may be interpreted as that the RRC reconfiguration message itself is encoded or decoded wrongly.

In the eighth application example, when the parameter configuration in the RRC reconfiguration message is acceptable, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

Then, the MeNB parses the RRC reconfiguration message. When the parameter configuration in the RRC reconfiguration message is acceptable, the MeNB constructs a new Uu interface RRC reconfiguration message carrying an RRC reconfiguration parameter of the MeNB to the UE.

Next, after the MeNB has received a Uu interface RRC reconfiguration success message, the MeNB constructs an RRC reconfiguration success message of the SeNB.

Finally, the MeNB transmits, via an Xn interface, the RRC reconfiguration success message of the SeNB to the SeNB through an RRC container or an Xn IE.

In the embodiments of the present disclosure, "the parameter configuration in the RRC reconfiguration message is acceptable" refers to that the parameter configuration does not go beyond the capability of the UE, and an abnormality does not occur during the execution of the parameter configuration in the RRC reconfiguration message.

In the ninth application example, when the parameter configuration in the RRC reconfiguration message is unacceptable, the method may include the following steps.

At first, the SeNB constructs a new RRC reconfiguration message carrying a new RRC reconfiguration parameter. The RRC reconfiguration message is included in an Xn interface message, and transmitted to the MeNB via an RRC container.

Then, the MeNB parses the RRC reconfiguration message. When the parameter configuration in the RRC reconfiguration message is unacceptable, the MeNB needs to notify the SeNB of an abnormality during the RRC reconfiguration.

Next, the MeNB directly transmits a failure response message indicating the abnormality during the RRC reconfiguration to the SeNB via an Xn IE or a RRC IE. Further, the MeNB may notify the SeNB that all the bearers need to be reconfigured.

Finally, after the SeNB has received the failure response message, the original radio parameter configuration may be adopted, and the subsequent reconfiguration for all the bearers may be performed.

In the embodiments of the present disclosure, "the parameter configuration in the RRC reconfiguration message is unacceptable" refers to that the parameter configuration in the RRC reconfiguration message goes beyond the capability of the UE, or an abnormality occurs during the execution of the parameter configuration in the RRC reconfiguration message.

On the basis of an identical inventive concept, the present disclosure further provides in some embodiments a UE which, as shown in Fig.6, includes an RRC reconfiguration information reception module 601 and an RRC reconfiguration result processing module 602. The RRC reconfiguration information reception module 601 is configured to receive from an MeNB an RRC reconfiguration message carrying an RRC reconfiguration parameter of an SeNB and an RRC reconfiguration parameter of the MeNB. The RRC reconfiguration result processing module 602 is configured to, when the RRC reconfiguration parameter of the MeNB is ignorable, not return to the MeNB a message or return RRC reconfiguration result information of the SeNB to the MeNB. When RRC reconfiguration for the MeNB has been completed in accordance with the RRC reconfiguration parameter of the MeNB, the RRC reconfiguration result processing module 602 is configured to return to the MeNB an RRC reconfiguration success message carrying the RRC reconfiguration result information of the SeNB. When an abnormality occurs during the RRC reconfiguration for the MeNB in accordance with the RRC reconfiguration parameter of the MeNB, the RRC reconfiguration result processing module 602 is configured to initiate RRC reconstruction for the MeNB.

According to the UE in the embodiments of the present disclosure, in the case of bearer distribution, when the RRC reconfiguration message received by the UE includes both the RRC reconfiguration parameter of the MeNB and the RRC reconfiguration parameter of the SeNB, an RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

Optionally, when the RRC reconfiguration for the SeNB has been completed in accordance with the RRC reconfiguration parameter of the SeNB, the RRC reconfiguration result information of the SeNB is RRC reconfiguration success information of the SeNB. When an abnormality occurs during the RRC reconfiguration in accordance with the RRC reconfiguration parameter of the SeNB, the RRC reconfiguration result information of the SeNB is RRC reconfiguration abnormality information of the SeNB.

Optionally, when the RRC reconfiguration parameter of the SeNB is ignorable, the RRC reconfiguration result processing module 602 is further configured to not return to the MeNB information carrying the RRC reconfiguration result of the SeNB.

On the basis of an identical inventive concept, the present disclosure further provides in some embodiments a UE, including a processor configured to: receive from an MeNB an RRC reconfiguration message carrying an RRC reconfiguration parameter of an SeNB and an RRC reconfiguration parameter of the MeNB; when the RRC reconfiguration parameter of the MeNB is ignorable, not return to the MeNB a message, or return RRC reconfiguration result information of the SeNB to the MeNB; when RRC reconfiguration for the MeNB has been completed in accordance with the RRC reconfiguration parameter of the MeNB, return to the MeNB an RRC reconfiguration success message carrying the RRC reconfiguration result information of the SeNB; and when an abnormality occurs during the RRC reconfiguration for the MeNB in accordance with the RRC reconfiguration parameter of the MeNB, initiate RRC reconstruction for the MeNB.

According to the UE in the embodiments of the present disclosure, in the case of bearer distribution, when the RRC reconfiguration message received by the UE includes both the RRC reconfiguration parameter of the MeNB and the RRC reconfiguration parameter of the SeNB, an RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

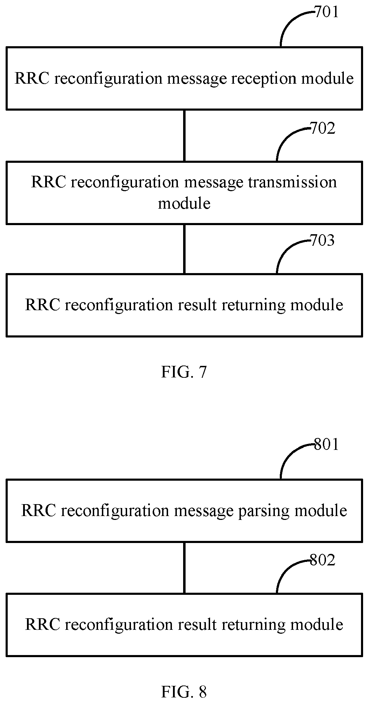

On the basis of an identical inventive concept, the present disclosure further provides in some embodiments an MeNB which, as shown in Fig.7, includes: an RRC reconfiguration message reception module 701 configured to receive from an SeNB an RRC reconfiguration message carrying an RRC reconfiguration parameter of the SeNB; an RRC reconfiguration message transmission module 702 configured to transmit to a UE an RRC reconfiguration message of the MeNB carrying the RRC reconfiguration message from the SeNB, the RRC reconfiguration message of the MeNB further including an RRC reconfiguration parameter of the MeNB; and an RRC reconfiguration result returning module 703 configured to, when receiving from the UE RRC reconfiguration result information of the SeNB, return to the SeNB an RRC reconfiguration result in accordance with the RRC reconfiguration result information of the SeNB.

According to the MeNB in the embodiments of the present disclosure, in the case of bearer distribution, the MeNB transmits to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

Optionally, the RRC reconfiguration result returning module 703 is configured to: when the RRC reconfiguration result information of the SeNB is RRC reconfiguration success information of the SeNB, return to the SeNB an RRC reconfiguration success message; and when the RRC reconfiguration result information of the SeNB is RRC reconfiguration abnormality information, return to the SeNB an RRC reconfiguration abnormality message.

Optionally, the RRC reconfiguration result returning module 703 is further configured to, when the RRC reconfiguration result information of the SeNB has not been received, not return to the SeNB the RRC reconfiguration result.

On the basis of an identical inventive concept, the present disclosure further provides in some embodiments an MeNB which includes a processor configured to: receive from an SeNB an RRC reconfiguration message carrying an RRC reconfiguration parameter of the SeNB; transmit to a UE an RRC reconfiguration message of the MeNB carrying the RRC reconfiguration message from the SeNB, the RRC reconfiguration message of the MeNB further including an RRC reconfiguration parameter of the MeNB; and when the MeNB has received from the UE RRC reconfiguration result information of the SeNB, return to the SeNB an RRC reconfiguration result in accordance with the RRC reconfiguration result information of the SeNB.

According to the MeNB in the embodiments of the present disclosure, in the case of bearer distribution, the MeNB transmits to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

On the basis of an identical inventive concept, the present disclosure further provides in some embodiments an MeNB which, as shown in Fig.8, includes an RRC reconfiguration message parsing module 801 and an RRC reconfiguration result returning module 802. The RRC reconfiguration message parsing module 801 is configured to, when receiving an RRC reconfiguration message of an SeNB, parse the RRC reconfiguration message of the SeNB. The RRC reconfiguration result returning module 802 is configured to, when parameter configuration acquired by parsing the RRC reconfiguration message of the SeNB is acceptable, forward to a UE the RRC reconfiguration message of the SeNB and return an RRC reconfiguration success message to the SeNB after RRC reconfiguration for the SeNB has been completed successfully, and when the parameter configuration acquired by parsing the RRC reconfiguration message of the SeNB is unacceptable, transmit to the SeNB an RRC reconfiguration abnormality message.

According to the MeNB in the embodiments of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

Optionally, the RRC reconfiguration result returning module 802 is further configured to, when the RRC reconfiguration message of the SeNB is ignorable, not perform any processing or transmit to the SeNB a notification message notifying that the RRC reconfiguration message of the SeNB is ignorable.

On the basis of an identical inventive concept, the present disclosure further provides in some embodiments an MeNB which includes a processor configured to: when receiving an RRC reconfiguration message of an SeNB, parse the RRC reconfiguration message of the SeNB; when parameter configuration acquired by parsing the RRC reconfiguration message of the SeNB is acceptable, forward to a UE the RRC reconfiguration message of the SeNB and return an RRC reconfiguration success message to the SeNB after RRC reconfiguration for the SeNB has been completed successfully; and when the parameter configuration acquired by parsing the RRC reconfiguration message of the SeNB is unacceptable, transmit to the SeNB an RRC reconfiguration abnormality message.

According to the MeNB in the embodiments of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

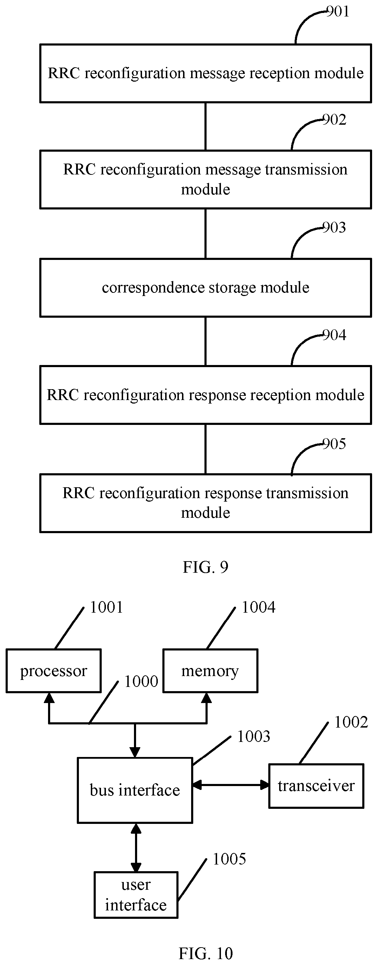

On the basis of an identical inventive concept, the present disclosure further provides in some embodiments an MeNB which, as shown in Fig.9, includes: an RRC reconfiguration message reception module 901 configured to receive an RRC reconfiguration message of an SeNB carrying a first RRC transaction identifier and an RRC reconfiguration parameter of the SeNB; an RRC reconfiguration message transmission module 902 configured to generate an RRC reconfiguration message carrying a second RRC transaction identifier and the RRC reconfiguration parameter of the SeNB, and transmit the generated RRC reconfiguration message of the MeNB to a UE; a correspondence storing module 903 configured to store a correspondence between the first RRC transaction identifier and the second RRC transaction identifier; an RRC reconfiguration response reception module 904 configured to receive from the UE an RRC reconfiguration response message carrying the second RRC transaction identifier and RRC reconfiguration result information; and an RRC reconfiguration response transmission module 905 configured to transmit to the SeNB an RRC reconfiguration response message carrying the first RRC transaction identifier and the RRC reconfiguration result information.

According to the MeNB in the embodiments of the present disclosure, in the case of bearer distribution, after the MeNB has received the RRC reconfiguration message of the SeNB carrying the RRC reconfiguration parameter, the MeNB constructs the RRC reconfiguration message of the MeNB, and stores the correspondence between the RRC transaction identifiers carried in the two messages. In this way, merely the received RRC reconfiguration message is processed at the UE side, regardless of the RRC reconfiguration message of the MeNB or the RRC reconfiguration message of the SeNB. The MeNB receives the RRC reconfiguration response message in accordance with the stored correspondence between the RRC transaction identifiers, and transmits it to the SeNB. As a result, it is able to process the RRC parameter parallel configuration for the SeNB.

On the basis of an identical inventive concept, the present disclosure further provides in some embodiments an MeNB which includes a processor configured to: receive an RRC reconfiguration message of an SeNB carrying a first RRC transaction identifier and an RRC reconfiguration parameter of the SeNB; generate an RRC reconfiguration message carrying a second RRC transaction identifier and the RRC reconfiguration parameter of the SeNB, and transmit it to a UE; store a correspondence between the first RRC transaction identifier and the second RRC transaction identifier; receive from the UE an RRC reconfiguration response message carrying the second RRC transaction identifier and RRC reconfiguration result information; and transmit to the SeNB an RRC reconfiguration response message carrying the first RRC transaction identifier and the RRC reconfiguration result information.

On the basis of an identical inventive concept, the present disclosure further provides in some embodiments a UE which, as shown in Fig.10, includes a processor 1001, a transceiver 1002, and a memory 1004. The processor 1001 is configured to read programs stored in the memory 1004, so as to perform following steps: receive from an MeNB an RRC reconfiguration message carrying an RRC reconfiguration parameter of an SeNB and an RRC reconfiguration parameter of the MeNB via the transceiver 1002; when the RRC reconfiguration parameter of the MeNB is ignorable, not return to the MeNB a message or return RRC reconfiguration result information of the SeNB to the MeNB, when RRC reconfiguration for the MeNB has been completed in accordance with the RRC reconfiguration parameter of the MeNB, return to the MeNB an RRC reconfiguration success message carrying the RRC reconfiguration result information of the SeNB, and when an abnormality occurs during the RRC reconfiguration for the MeNB in accordance with the RRC reconfiguration parameter of the MeNB, initiate RRC reconstruction for the MeNB. The transceiver 1002 is configured to receive and transmit data under the control of the processor 1001.

According to the UE in the embodiments of the present disclosure, in the case of bearer distribution, when the RRC reconfiguration message received by the UE includes both the RRC reconfiguration parameter of the MeNB and the RRC reconfiguration parameter of the SeNB, an RRC reconfiguration result of the SeNB may be returned in a way different from an RRC reconfiguration result of the MeNB. As a result, it is able for a network side to acquire the RRC reconfiguration result of the SeNB, thereby to process the RRC parameter parallel configuration for the SeNB.

Optionally, when the RRC reconfiguration for the SeNB has been completed in accordance with the RRC reconfiguration parameter of the SeNB, the RRC reconfiguration result information of the SeNB is RRC reconfiguration success information of the SeNB; when an abnormality occurs during the RRC reconfiguration in accordance with the RRC reconfiguration parameter of the SeNB, the RRC reconfiguration result information of the SeNB is RRC reconfiguration abnormality information of the SeNB.

Optionally, when the RRC reconfiguration parameter of the SeNB is ignorable, the processor 1001 is further configured to not return to the MeNB information carrying the RRC reconfiguration result of the SeNB.

In Fig.10, a bus architecture (represented by bus 1000) may include a number of buses and bridges connected to each other, so as to connect various circuits for one or more processors 1001 and one or more memories 1004. In addition, as is known in the art, the bus architecture 1000 may be used to connect any other circuits, such as a circuit for a peripheral device, a circuit for a voltage stabilizer and a power management circuit. Bus interfaces 1003 are provided between the bus architecture 1000 and the transceiver 1002, and the transceiver 1002 may consist of one element, or more than one elements, e.g., a plurality of transmitters and receivers for communication with any other devices over a transmission medium. For example, the transceiver 1002 may receive external data from the other devices, and transmit the data processed by the processor 1001 to the other devices. Depending on properties of a computing system, a user interface 1005 may also be provided, e.g., a keypad, a display, a speaker, a microphone or a joystick.

The processor 1001 takes charge of managing the bus architecture 1000 as well general processings, e.g., running a general-purpose operating system. Also, the processor 1001 may be used to provide various functions, including timing, peripheral interfaces, voltage regulation, power supply management and any other control functions. The memory 1004 may store data desired for the operation of the processor 1001.

Optionally, the processor 1001 may be a Central Processing Unit (CPU), an Application Specific Integrated Circuit (ASIC), a Field-Programmable Gate Array (FPGA) or a Complex Programmable Logic Device (CPLD).

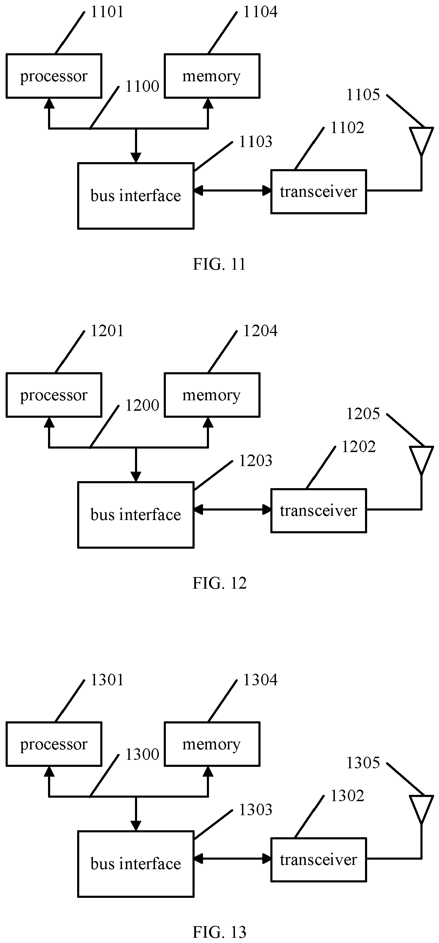

On the basis of an identical inventive concept, the present disclosure further provides an MeNB which, as shown in Fig.11, includes a processor 1101, a transceiver 1102 and a memory 1104. The processor 1101 is configured to read programs stored in the memory 1104, so as to perform the following steps: receive from an SeNB an RRC reconfiguration message carrying an RRC reconfiguration parameter of the SeNB via the transceiver 1102; transmit to a UE an RRC reconfiguration message of the MeNB carrying the RRC reconfiguration message from the SeNB, the RRC reconfiguration message of the MeNB further including an RRC reconfiguration parameter of the MeNB; and when receiving from the UE RRC reconfiguration result information of the SeNB, return to the SeNB an RRC reconfiguration result in accordance with the RRC reconfiguration result information of the SeNB. The transceiver 1102 is configured to receive and transmit data under the control of the processor 1101.

According to the MeNB in the embodiments of the present disclosure, in the case of bearer distribution, the MeNB transmits to the UE the RRC reconfiguration message of the SeNB, and returns the RRC reconfiguration result received from the UE to the SeNB. As a result, it is able for a network side to acquire the RRC reconfiguration result of the SeNB, thereby to process the RRC parameter parallel configuration for the SeNB.

Optionally, the processor 1101 is configured to: when the RRC reconfiguration result information of the SeNB is RRC reconfiguration success information of the SeNB, return to the SeNB an RRC reconfiguration success message; and when the RRC reconfiguration result information of the SeNB is RRC reconfiguration abnormality information, return to the SeNB an RRC reconfiguration abnormality message.

Optionally, the processor 1101 is further configured to, when the RRC reconfiguration result information of the SeNB has not been received, not return to the SeNB the RRC reconfiguration result.

In Fig.11, a bus architecture (represented by bus 1100) may include a number of buses and bridges connected to each other, so as to connect various circuits for one or more processors 1101 and one or more memories 1104. In addition, as is known in the art, the bus architecture 1100 may be used to connect any other circuits, such as a circuit for a peripheral device, a circuit for a voltage stabilizer and a power management circuit. Bus interfaces 1103 are provided between the bus architecture 1100 and the transceiver 1102, and the transceiver 1102 may consist of one element, or more than one elements, e.g., a plurality of transmitters and receivers for communication with any other devices over a transmission medium. For example, the transceiver 1102 may receive external data from the other devices, and transmit the data processed by the processor 1101 to the other devices. The data processed by the processor 1101 is transmitted over a radio medium through an antenna 1105. Further, the antenna 1105 may further receive data and transmit the data to the processor 1101.

The processor 1101 takes charge of managing the bus architecture 1100 as well general processings. Also, the processor 1101 may be used to provide various functions, including timing, peripheral interfaces, voltage regulation, power supply management and any other control functions. The memory 1104 may store data desired for the operation of the processor 1101.

Optionally, the processor 1101 may be a CPU, an ASIC, an FPGA or a CPLD.

On the basis of an identical inventive concept, the present disclosure further provides in some embodiments an MeNB which, as shown in Fig.12, includes a processor 1201, a transceiver 1202 and a memory 1204. The processor 1201 is configured to read programs stored in the memory 1204, so as to perform the following steps: when receiving an RRC reconfiguration message of an SeNB via the transceiver 1202, parse the RRC reconfiguration message of the SeNB; when parameter configuration acquired by parsing the RRC reconfiguration message of the SeNB is acceptable, forward to a UE the RRC reconfiguration message of the SeNB and return an RRC reconfiguration success message to the SeNB after RRC reconfiguration for the SeNB has been completed successfully; and when the parameter configuration acquired by parsing the RRC reconfiguration message of the SeNB is unacceptable, transmit to the SeNB an RRC reconfiguration abnormality message. The transceiver 1202 is configured to receive and transmit data under the control of the processor 1201.

According to the MeNB in the embodiments of the present disclosure, in the case of bearer distribution, the MeNB parses at first the RRC reconfiguration message of the SeNB, and transmits to the SeNB the RRC reconfiguration success message or an RRC parameter reconstruction message in accordance with the parameter configuration. As a result, it is able for the MeNB to effectively process the RRC parameter parallel configuration for the SeNB.

Optionally, the processor 1201 is further configured to, when the RRC reconfiguration message of the SeNB is ignorable, not perform any processing or transmit to the SeNB a notification message notifying that the RRC reconfiguration message of the SeNB is ignorable.

In Fig.12, a bus architecture (represented by bus 1200) may include a number of buses and bridges connected to each other, so as to connect various circuits for one or more processors 1201 and one or more memories 1204. In addition, as is known in the art, the bus architecture 1200 may be used to connect any other circuits, such as a circuit for a peripheral device, a circuit for a voltage stabilizer and a power management circuit. Bus interfaces 1203 are provided between the bus architecture 1200 and the transceiver 1202, and the transceiver 1202 may consist of one element, or more than one elements, e.g., a plurality of transmitters and receivers for communication with any other devices over a transmission medium. For example, the transceiver 1202 may receive external data from the other devices, and transmit the data processed y the processor 1201 to the other devices. The data processed by the processor 1201 is transmitted over a radio medium through an antenna 1205. Further, the antenna 1205 may further receive data and transmit the data to the processor 1201.

The processor 1201 takes charge of managing the bus architecture 1200 as well general processings. Also, the processor 1201 may be used to provide various functions, including timing, peripheral interfaces, voltage regulation, power supply management and any other control functions. The memory 1204 may store data desired for the operation of the processor 1201.

Optionally, the processor 1201 may be a CPU, an ASIC, an FPGA or a CPLD.

On the basis of an identical inventive concept, the present disclosure further provides in some embodiments an MeNB which, as shown in Fig.13, includes a processor 1301, a transceiver 1302, and a memory 1304. The processor 1301 is configured to read programs stored in the memory 1304, so as to perform the following steps: receive an RRC reconfiguration message of an SeNB carrying a first RRC transaction identifier and an RRC reconfiguration parameter of the SeNB via the transceiver 1302; generate an RRC reconfiguration message carrying a second RRC transaction identifier and the RRC reconfiguration parameter of the SeNB, and transmit it to a UE; store a correspondence between the first RRC transaction identifier and the second RRC transaction identifier in the memory 1304; receive from the UE an RRC reconfiguration response message carrying the second RRC transaction identifier and RRC reconfiguration result information via the transceiver 1302; and transmit to the SeNB an RRC reconfiguration response message carrying the first RRC transaction identifier and the RRC reconfiguration result information via the transceiver 1302. The transceiver 1302 is configured to receive and transmit data under the control of the processor 1301.

According to the MeNB in the embodiments of the present disclosure, in the case of bearer distribution, after the MeNB has received the RRC reconfiguration message of the SeNB carrying the RRC reconfiguration parameter, the MeNB constructs the RRC reconfiguration message of the MeNB, and stores the correspondence between the RRC transaction identifiers carried in the two messages. In this way, merely the received RRC reconfiguration message is processed at the UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

In Fig.13, a bus architecture (represented by bus 1300) may include a number of buses and bridges connected to each other, so as to connect various circuits for one or more processors 1301 and one or more memories 1304. In addition, as is known in the art, the bus architecture 1300 may be used to connect any other circuits, such as a circuit for a peripheral device, a circuit for a voltage stabilizer and a power management circuit. Bus interfaces 1303 are provided between the bus architecture 1300 and the transceiver 1302, and the transceiver 1302 may consist of one element, or more than one elements, e.g., a plurality of transmitters and receivers for communication with any other devices over a transmission medium. For example, the transceiver 1302 may receive external data from the other devices, and transmit the data processed y the processor 1301 to the other devices. The data processed by the processor 1301 is transmitted over a radio medium through an antenna 1305. Further, the antenna 1305 may further receive data and transmit the data to the processor 1301.

The processor 1301 takes charge of managing the bus architecture 1300 as well general processings. Also, the processor 1301 may be used to provide various functions, including timing, peripheral interfaces, voltage regulation, power supply management and any other control functions. The memory 1304 may store data desired for the operation of the processor 1301.

Optionally, the processor 1301 may be a CPU, an ASIC, an FPGA or a CPLD.

According to the MeNB in the embodiments of the present disclosure, in the case of bearer distribution, after the MeNB has received the RRC reconfiguration message of the SeNB carrying the RRC reconfiguration parameter, the MeNB constructs the RRC reconfiguration message of the MeNB, and stores the correspondence between the RRC transaction identifiers carried in the two messages. In this way, merely the received RRC reconfiguration message is processed at the UE side, regardless of the RRC reconfiguration message of the MeNB or the RRC reconfiguration message of the SeNB. The MeNB receives the RRC reconfiguration response message in accordance with the correspondence between the RRC transaction identifiers, and transmits it to the SeNB. As a result, it is able to process the RRC parameter parallel configuration for the SeNB.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc Read-Only Memory (CD-ROM) and optical memory) including computer-readable program codes.

The present disclosure is described with reference to the flow charts and/or block diagrams showing the method, device (system) and computer program product according to the embodiments of the present disclosure. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

## Claims

1. An evolved Node B, eNB, reconfiguration method, **characterized by** comprising steps of:
receiving (100), by a User Equipment, UE, from a Master eNB, MeNB, a Radio Resource Control, RRC, reconfiguration message carrying an RRC reconfiguration parameter of a secondary eNB, SeNB, and an RRC reconfiguration parameter of the MeNB;
when the RRC reconfiguration parameter of the MeNB is ignorable, not returning (110), by the UE, to the MeNB a message, or returning RRC reconfiguration result information of the SeNB to the MeNB;
when RRC reconfiguration for the MeNB has been completed in accordance with the RRC reconfiguration parameter of the MeNB, returning (120), by the UE, to the MeNB an RRC reconfiguration success message carrying the RRC reconfiguration result information of the SeNB; and
when an abnormality occurs during the RRC reconfiguration for the MeNB in accordance with the RRC reconfiguration parameter of the MeNB, initiating (130), by the UE, RRC reconstruction for the MeNB.

2. The method according to claim 1, wherein when the RRC reconfiguration for the SeNB has been completed in accordance with the RRC reconfiguration parameter of the SeNB, the RRC reconfiguration result information of the SeNB is RRC reconfiguration success information of the SeNB;
when an abnormality occurs during the RRC reconfiguration in accordance with the RRC reconfiguration parameter of the SeNB, the RRC reconfiguration result information of the SeNB is RRC reconfiguration abnormality information of the SeNB.

3. The method according to claim 1 or 2, further comprising, when the RRC reconfiguration parameter of the SeNB is ignorable, not returning information carrying the RRC reconfiguration result of the SeNB to the MeNB.

4. An evolved Node B, eNB, reconfiguration method, **characterized by** comprising steps of:
receiving (200), by a Master eNB, MeNB, from a secondary eNB, SeNB, a Radio Resource Control, RRC, reconfiguration message carrying an RRC reconfiguration parameter of the SeNB;
transmitting (210), by the MeNB, to a User Equipment, UE, an RRC reconfiguration message of the MeNB carrying the RRC reconfiguration message from the SeNB, the RRC reconfiguration message of the MeNB further including an RRC reconfiguration parameter of the MeNB; and
when the MeNB has received RRC reconfiguration result information of the SeNB from the UE, returning (220), by the MeNB, to the SeNB an RRC reconfiguration result in accordance with the RRC reconfiguration result information of the SeNB.

5. The method according to claim 4, wherein the step of returning to the SeNB the RRC reconfiguration result in accordance with the RRC reconfiguration result information of the SeNB comprises:
when the RRC reconfiguration result information of the SeNB is RRC reconfiguration success information of the SeNB, returning, by the MeNB, to the SeNB an RRC reconfiguration success message; and
when the RRC reconfiguration result information of the SeNB is RRC reconfiguration abnormality information, returning, by the MeNB, to the SeNB an RRC reconfiguration abnormality message.

6. The method according to claim 4 or 5, further comprising when not receiving the RRC reconfiguration result information of the SeNB, not returning to the SeNB the RRC reconfiguration result.

7. A User Equipment, UE, **characterized by** comprising:
a Radio Resource Control, RRC, reconfiguration information reception module (601) configured to receive from a Master evolved Node B, MeNB, an RRC reconfiguration message carrying an RRC reconfiguration parameter of a secondary eNB, SeNB, and an RRC reconfiguration parameter of the MeNB; and
an RRC reconfiguration result processing module (602) configured to, when the RRC reconfiguration parameter of the MeNB is ignorable, not return to the MeNB a message or return RRC reconfiguration result information of the SeNB to the MeNB; when RRC reconfiguration for the MeNB has been completed in accordance with the RRC reconfiguration parameter of the MeNB, return to the MeNB an RRC reconfiguration success message carrying the RRC reconfiguration result information of the SeNB; and when an abnormality occurs during the RRC reconfiguration for the MeNB in accordance with the RRC reconfiguration parameter of the MeNB, initiate RRC reconstruction for the MeNB.

8. A master evolved Node B, MeNB, **characterized by** comprising:
a Radio Resource Control, RRC, reconfiguration message reception module (701) configured to receive from a secondary eNB, SeNB, an RRC reconfiguration message carrying an RRC reconfiguration parameter of the SeNB;
an RRC reconfiguration message transmission module (702) configured to transmit to a User Equipment, UE, an RRC reconfiguration message of the MeNB carrying the RRC reconfiguration message from the SeNB, the RRC reconfiguration message of the MeNB further including an RRC reconfiguration parameter of the MeNB; and
an RRC reconfiguration result returning module (703) configured to, when the receiving RRC reconfiguration result information of the SeNB from the UE, return to the SeNB an RRC reconfiguration result in accordance with the RRC reconfiguration result information of the SeNB.

9. The MeNB according to claim 8, wherein the RRC reconfiguration result returning module (703) is configured to: when the RRC reconfiguration result information of the SeNB is RRC reconfiguration success information of the SeNB, return to the SeNB an RRC reconfiguration success message; and when the RRC reconfiguration result information of the SeNB is RRC reconfiguration abnormality information, return to the SeNB an RRC reconfiguration abnormality message.

10. The MeNB according to claim 8 or 9, wherein the RRC reconfiguration result returning module (703) is further configured to, when not receiving the RRC reconfiguration result information of the SeNB, not return to the SeNB the RRC reconfiguration result.

## Patentansprüche

1. Rekonfigurationsverfahren für evolved-Node-B, eNB, **gekennzeichnet durch** das Umfassen folgender Schritte:
Empfangen (100), durch ein Benutzergerät, UE, von einem Master-eNB, MeNB, einer Rekonfigurationsnachricht für eine Radio Resource Control, RRC, die einen RRC-Rekonfigurationsparameter eines Sekundär-eNB, SeNB, und einen RRC-Rekonfigurationsparameter des MeNB trägt;
wenn der RRC-Rekonfigurationsparameter des MeNB ignorierbar ist, kein Rücksenden (110), durch das UE, einer Nachricht an den MeNB oder Rücksenden der RRC-Rekonfigurationsergebnisinformationen des SeNB an den MeNB;
wenn die RRC-Rekonfiguration für den MeNB gemäß dem RRC-Rekonfigurationsparameter des MeNB abgeschlossen ist, Rücksenden (120), durch das UE, an den MeNB einer RRC-Rekonfigurationserfolgsnachricht, welche die RRC-Rekonfigurationsergebnisinformation des SeNB trägt; und
wenn während der RRC-Rekonfiguration für den MeNB eine Abnormalität gemäß dem RRC-Rekonfigurationsparameter der MeNB auftritt, Initiieren (130), durch das UE, von RRC-Rekonstruktion für den MeNB.

2. Verfahren nach Anspruch 1, wobei, wenn die RRC-Rekonfiguration für den SeNB gemäß dem RRC-Rekonfigurationsparameter des SeNB abgeschlossen wurde, die RRC-Rekonfigurationsergebnisinformation des SeNB eine RRC-Rekonfigurationserfolgsinformation des SeNB ist;
wenn während der RRC-Rekonfiguration gemäß dem RRC-Rekonfigurationsparameter des SeNB eine Abnormalität auftritt, die RRC-Rekonfigurationsergebnisinformation des SeNB eine RRC-Rekonfigurationsabnormalitätsinformation des SeNB ist.

3. Verfahren nach Anspruch 1 oder 2, weiter umfassend, wenn der RRC-Rekonfigurationsparameter des SeNB ignorierbar ist, kein Rücksenden von Information, die das RRC-Rekonfigurationsergebnis des SeNB trägt, an den MeNB.

4. Rekonfigurationsverfahren für evolved-Node-B, eNB, **gekennzeichnet durch** das Umfassen folgender Schritte:
Empfangen (200), durch einen Master-eNB, MeNB, von einem Sekundär-eNB, SeNB, einer Rekonfigurationsnachricht für eine Radio Resource Control, RRC, die einen RRC-Rekonfigurationsparameter des Sekundär-eNB, SeNB, trägt;
Übertragen (210), durch den MeNB, an ein Benutzergerät, UE, einer RRC-Rekonfigurationsnachricht des MeNB, der die RRC-Rekonfigurationsnachricht von dem SeNB trägt, wobei die RRC-Rekonfigurationsnachricht des MeNB weiter einen RRC-Rekonfigurationsparameter des MeNB beinhaltet; und
wenn der MeNB RRC-Rekonfigurationsergebnisinformation des SeNB von dem UE empfangen hat, Rücksenden (220), durch den MeNB, eines RRC-Rekonfigurationsergebnisses an den SeNB gemäß der RRC-Rekonfigurationsergebnisinformation des SeNB.

5. Verfahren nach Anspruch 4, wobei der Schritt des Rücksendens des RRC-Rekonfigurationsergebnisses an den SeNB gemäß der RRC-Rekonfigurationsergebnisinformation des SeNB umfasst:
wenn die RRC-Rekonfigurationsergebnisinformation des SeNB RRC-Rekonfigurationserfolgsinformation des SeNB ist, Rücksenden einer RRC-Rekonfigurationserfolgsnachricht durch den MeNB an den SeNB; und
wenn die RRC-Rekonfigurationsergebnisinformation des SeNB eine RRC-Rekonfigurationsabnormalitätsinformation ist, Rücksenden einer RRC-Rekonfigurationsabnormalitätsnachricht durch den MeNB an den SeNB.

6. Verfahren nach Anspruch 4 oder 5, weiter umfassend, wenn die RRC-Rekonfigurationsergebnisinformation des SeNB nicht empfangen wird, kein Rücksenden des RRC-Rekonfigurationsergebnisses an den SeNB.

7. Benutzergerät, UE, **gekennzeichnet durch** das Umfassen von:
einem Empfangsmodul (601) für Rekonfigurationsinformation der Radio Resource Control (RRC), das zum Empfangen, von einem Master-evolved-Node-B, MeNB, einer RRC-Rekonfigurationsnachricht konfiguriert ist, die einen RRC-Rekonfigurationsparameter eines Sekundär-eNB, SeNB, und einen RRC-Rekonfigurationsparameter des MeNB trägt; und
einem Verarbeitungsmodul (602) eines RRC-Rekonfigurationsergebnisses, das konfiguriert ist, wenn der RRC-Rekonfigurationsparameter des MeNB ignorierbar ist, keine Nachricht an den MeNB zurückzusenden oder die RRC-Rekonfigurationsergebnisinformation des SeNB an den MeNB zurückzusenden;
wenn die RRC-Rekonfiguration für den MeNB gemäß dem RRC-Rekonfigurationsparameter des MeNB abgeschlossen ist, Rücksenden an den MeNB einer RRC-Rekonfigurationserfolgsnachricht, welche die RRC-Rekonfigurationsergebnisinformation des SeNB trägt; und wenn während der RRC-Rekonfiguration für den MeNB eine Abnormalität gemäß dem RRC-Rekonfigurationsparameter der MeNB auftritt, Initiieren der RRC-Rekonstruktion für den MeNB.

8. Evolved-Master-Node-B, MeNB, **gekennzeichnet durch** das Umfassen von:
einem Empfangsmodul (701) für Rekonfigurationsnachrichten der Radio Resource Control, RRC, das zum Empfangen, von einem Sekundär-eNB, SeNB, einer RRC-Rekonfigurationsnachricht konfiguriert ist, die einen RRC-Rekonfigurationsparameter des SeNB trägt;
ein Übertragungsmodul (702) für RRC-Rekonfigurationsnachrichten, das zum Übertragen, an ein Benutzergerät, UE, einer RRC-Rekonfigurationsnachricht des MeNB, der die RRC-Rekonfigurationsnachricht von dem SeNB trägt, konfiguriert ist, wobei die RRC-Rekonfigurationsnachricht des MeNB weiter einen RRC-Rekonfigurationsparameter des MeNB aufweist; und
ein Rücksendemodul (703) für ein RRC-Rekonfigurationsergebnis, das konfiguriert ist, um, wenn die RRC-Rekonfigurationsergebnisinformation des SeNB von dem UE empfangen wird, ein RRC-Rekonfigurationsergebnis gemäß den RRC-Rekonfigurationsergebnisinformationen des SeNB an den SeNB zurückzusenden.

9. MeNB nach Anspruch 8, wobei das Rücksendemodul (703) für RRC-Rekonfigurationsergebnisse konfiguriert ist zum: wenn die RRC-Rekonfigurationsergebnisinformation des SeNB RRC-Rekonfigurationserfolgsinformation des SeNB ist, Rücksenden einer RRC-Rekonfigurationserfolgsnachricht an den SeNB; und wenn die RRC-Rekonfigurationsergebnisinformation des SeNB eine RRC-Rekonfigurationsabnormalitätsinformation ist, Rücksenden einer RRC-Rekonfigurationsabnormalitätsnachricht an den SeNB.

10. MeNB nach Anspruch 8 oder 9, wobei das Rücksendemodul (703) für das RRC-Rekonfigurationsergebnis weiter konfiguriert ist, um, wenn keine RRC-Rekonfigurationsergebnisinformation des SeNB empfangen wird, kein RRC-Rekonfigurationsergebnis an den SeNB zurückzusenden.

## Revendications

1. Procédé de reconfiguration de Noeud B évolué, eNB, **caractérisé en ce qu'**il comprend les étapes de :
réception (100), par un Équipement Utilisateur, UE, en provenance d'un eNB Maître, MeNB, un message de reconfiguration de Commande de Ressource Radio, RRC, portant un paramètre de reconfiguration de RRC d'un eNB secondaire, SeNB et un paramètre de reconfiguration de RRC du MeNB ;
quand le paramètre de reconfiguration de RRC du MeNB peut être ignoré, non-renvoi (110), par l'UE, au MeNB d'un message, ou renvoi d'informations de résultat de reconfiguration de RRC du SeNB au MeNB ;
quand une reconfiguration de RRC pour le MeNB a été achevée selon le paramètre de reconfiguration de RRC du MeNB, renvoi (120), par l'UE, au MeNB d'un message de succès de reconfiguration de RRC portant les informations de résultat de reconfiguration de RRC du SeNB ; et
quand une anomalie se produit pendant la reconfiguration de RRC pour le MeNB selon le paramètre de reconfiguration de RRC du MeNB, amorçage (130), par l'UE, d'une reconstruction de RRC pour le MeNB.

2. Procédé selon la revendication 1, dans lequel, quand la reconfiguration de RRC pour le SeNB a été achevée selon le paramètre de reconfiguration de RRC du SeNB, les informations de résultat de reconfiguration de RRC du SeNB sont des informations de succès de reconfiguration de RRC du SeNB ;
quand une anomalie se produit pendant la reconfiguration de RRC selon le paramètre de reconfiguration de RRC du SeNB, les informations de résultat de reconfiguration de RRC du SeNB sont des informations d'anomalie de reconfiguration de RRC du SeNB.

3. Procédé selon la revendication 1 ou 2, comprenant en outre, quand le paramètre de reconfiguration de RRC du SeNB peut être ignoré, le non-renvoi d'informations portant le résultat de reconfiguration de RRC du SeNB au MeNB.

4. Procédé de reconfiguration de Noeud B évolué, eNB, **caractérisé en ce qu'**il comprend les étapes de :
réception (200), par un eNB Maître, MeNB, en provenance d'un eNB secondaire, SeNB, d'un message de reconfiguration de Commande de Ressource Radio, RRC, portant un paramètre de reconfiguration de RRC du SeNB ;
émission (210), par le MeNB, à un Équipement Utilisateur, UE, d'un message de reconfiguration de RRC du MeNB portant le message de reconfiguration de RRC en provenance du SeNB, le message de reconfiguration de RRC du MeNB incluant en outre un paramètre de reconfiguration de RRC du MeNB ; et
quand le MeNB a reçu des informations de résultat de reconfiguration de RRC du SeNB en provenance de l'UE, renvoi (220), par le MeNB, au SeNB d'un résultat de reconfiguration de RRC selon les informations de résultat de reconfiguration de RRC du SeNB.

5. Procédé selon la revendication 4, dans lequel l'étape de renvoi au SeNB du résultat de reconfiguration de RRC selon les informations de résultat de reconfiguration de RRC du SeNB comprend :
quand les informations de résultat de reconfiguration de RRC du SeNB sont des informations de succès de reconfiguration de RRC du SeNB, le renvoi, par le MeNB, au SeNB d'un message de succès de reconfiguration de RRC ; et
quand les informations de résultat de reconfiguration de RRC du SeNB sont des informations d'anomalie de reconfiguration de RRC, le renvoi, par le MeNB, au SeNB d'un message d'anomalie de reconfiguration de RRC.

6. Procédé selon la revendication 4 ou 5, comprenant en outre lors de la non-réception des informations de résultat de reconfiguration de RRC du SeNB, le non-renvoi au SeNB du résultat de reconfiguration de RRC.

7. Équipement Utilisateur, UE, **caractérisé en ce qu'**il comprend :
un module de réception (601) d'informations de reconfiguration de Commande de Ressource Radio, RRC, configuré pour recevoir en provenance d'un Noeud B évolué Maître, MeNB, un message de reconfiguration de RRC portant un paramètre de reconfiguration de RRC d'un eNB secondaire, SeNB, et un paramètre de reconfiguration de RRC du MeNB ; et
un module de traitement (602) de résultat de reconfiguration de RRC configuré pour, quand le paramètre de reconfiguration de RRC du MeNB peut être ignoré, ne pas renvoyer au MeNB un message ou renvoyer des informations de résultat de reconfiguration de RRC du SeNB au MeNB ;
quand une reconfiguration de RRC pour le MeNB a été achevée selon le paramètre de reconfiguration de RRC du MeNB, le renvoi au MeNB d'un message de succès de reconfiguration de RRC portant les informations de résultat de reconfiguration de RRC du SeNB ; et quand une anomalie se produit pendant la reconfiguration de RRC pour le MeNB selon le paramètre de reconfiguration de RRC du MeNB, l'amorçage d'une reconstruction de RRC pour le MeNB.

8. Noeud B évolué maître, MeNB, **caractérisé en ce qu'**il comprend :
un module de réception (701) de message de reconfiguration de Commande de Ressource Radio, RRC, configuré pour recevoir en provenance d'un eNB secondaire, SeNB, un message de reconfiguration de RRC portant un paramètre de reconfiguration de RRC du SeNB ;
un module d'émission (702) de message de reconfiguration de RRC configuré pour émettre vers un Équipement Utilisateur, UE, un message de reconfiguration de RRC du MeNB portant le message de reconfiguration de RRC en provenance du SeNB, le message de reconfiguration de RRC du MeNB incluant en outre un paramètre de reconfiguration de RRC du MeNB ; et
un module de renvoi (703) de résultat de reconfiguration de RRC configuré pour, lors de la réception d'informations de résultat de reconfiguration de RRC du SeNB en provenance de l'UE, renvoyer au SeNB un résultat de reconfiguration de RRC selon les informations de résultat de reconfiguration de RRC du SeNB.

9. MeNB selon la revendication 8, dans lequel le module de renvoi (703) de résultat de reconfiguration de RRC est configuré pour : quand les informations de résultat de reconfiguration de RRC du SeNB sont des informations de succès de reconfiguration de RRC du SeNB, renvoyer au SeNB un message de succès de reconfiguration de RRC; et quand les informations de résultat de reconfiguration de RRC du SeNB sont des informations d'anomalie de reconfiguration de RRC, renvoyer au SeNB un message d'anomalie de reconfiguration de RRC.

10. MeNB selon la revendication 8 ou 9, dans lequel le module de renvoi (703) de résultat de reconfiguration de RRC est en outre configuré pour, lors de la non-réception des informations de résultat de reconfiguration de RRC du SeNB, ne pas renvoyer au SeNB le résultat de reconfiguration de RRC.
